# EUROPÄISCHE PATENTSCHRIFT

(11) **EP 0 640 214 B1**
(45) Veröffentlichungstag und Bekanntmachung des Hinweises auf die Patenterteilung: **27.08.1997**
(21) Anmeldenummer: 93908799.5
(22) Anmeldetag: 20.04.1993
(51) Int. Cl.: G01N 29/10

(54) **VERFAHREN ZUR ULTRASCHALLPRÜFUNG VON PUNKTSCHWEISSVERBINDUNGEN VON BLECHEN**
ULTRASONIC METHOD FOR THE INSPECTION OF POINT WELDS BETWEEN METAL PLATES
PROCEDE DE CONTROLE PAR ULTRASONS DES SOUDURES PAR POINTS DE TOLES

(30) Priorität: 22.04.1992 DE 4213212
(43) Veröffentlichungstag der Anmeldung: 01.03.1995
(73) Patentinhaber: KRAUTKRÄMER GmbH & Co., D-50354 Hürth (DE)
(72) Erfinder: VIEHMANN, Hans, D-5042 Erftstadt (DE); VOLKMANN, Klaus, D-5060 Bergisch Gladbach 2 (DE)
(74) Vertreter: Bauer, Wulf, Dr.
(86) Internationale Anmeldenummer: DE9300343
(87) Internationale Veröffentlichungsnummer: WO9321524

(56) Entgegenhaltungen:
- EP-A- 0 042 601
- EP-A- 0 191 346
- GB-A- 2 204 690
- US-A- 4 265 119

## Beschreibung

Die Erfindung bezieht sich auf ein Verfahren zur Ultraschallprüfung von Punktschweißverbindungen von Blechen, nach dem Oberbegriff des Patentanspruchs 1.

Nach der EP-A-42 601 ist es bekannt, Schweißstellen mit Hilfe eines Frequenzspektrums der Ultraschall-Echofolgen zu überprüfen. In zwei verschiedenen Ausführungsformen werden einerseits die Höhe (siehe Seite 5, Zeile 17) und andererseits die Breite (Seite 11, Zeile 2,3) der Spektrallinie mit Vergleichswerten verglichen.

Aus SU-A-584 243 (Derwent Abstract 78-J 7089A 44) ist ein Verfahren zur Messung der Größe von Fehlern in Punktschweißverbindungen bekannt, es werden zwei unterschiedliche Frequenzen für die Messung verwendet.

Die Prüfung von Punktschweißverbindungen ist im DE-Buch J. Krautkrämer und H. Krautkrämer "Werkstoffprüfung mit Ultraschall" 4. Aufl., S. 505 und 506 beschrieben. Danach erfolgt die Prüfung von Punktschweißverbindungen zweier Bleche durch Senkrechtprüfung und Erfassen der Mehrfachechos der Gesamtdicke. Bei guter Ausbildung der linsenförmigen Schweißverbindung (Schweißlinse) ergibt sich in Folge der hohen Schallschwächung am groben Gefüge der aus der Schmelze erstarrten Schweißlinse eine relativ kurze Echofolge aus der Gesamtdicke der miteinander verschweißten Bleche. Bei einer Kaltschweißung dagegen kommt es durch das feine Gefüge des Bleches mit deutlich geringerer Schallschwächung zu einer langen Echofolge aus der Gesamtlaufdicke. Die Grenzfläche zwischen den beiden Flächen reflektiert bei einer typischen Kaltschweißung nicht. Bei einer idealen Kaltschweißung ergibt sich allgemein eine sehr lange Mehrfachechofolge. Auch bei zu kleinem Volumen der Schweißlinse wird die Mehrfachechofolge länger, da der vom Schallimpuls zurückgelegte Weg im feinkörnigen Blech zunimmt und der Weg durch das stärker schallschwächende Gefüge der Schweißlinse abnimmt. Gleichzeitig tritt eine Verschiebung der Ultraschallfrequenz ein. Liegt überhaupt keine Verbindung zwischen den Blechen vor, so tritt keine Echofolge aus der Gesamtdicke auf. Es liegt dann nur die Echofolge für die Einzelblechdicke des angekoppelten Einzelblechs vor.

Die im PKW-Bau üblichen Linsendurchmesser der Schweißlinsen liegen zwischen 3,6 und 5,5 mm. Die Prüfköpfe haben einen entsprechenden Wandlerdurchmesser. Die Prüfkopffrequenz liegt im MHz-Bereich, beispielsweise bei 15 MHz. Die Ankopplung erfolgt über eine Kunststoff- oder Wasservorlaufstrecke.

Besondere Bedeutung kommt der Handhabung der Prüfköpfe zu. Nur bei richtiger senkrechter Ankopplung des Prüfkopfs und zentraler Durchschallung der Schweißlinse liegen korrekte Einschallbedingungen vor. Diese werden bei der praktischen Prüfung durch leichtes seitliches Verschieben in das Zentrum der Schweißlinse und senkrechtes Ausrichten erreicht, erkennbar am Minimum der Zwischenechofolge der Einzelblechdicke(n). Bei kürzest möglicher Echofolge aus der Gesamtdicke und kleinstmöglicher Echofolge aus den Einzelblechdicken ist die optimale Ausrichtung, sind also die optimalen Einschallbedingungen für den Priifkopf erreicht. Bei nicht optimalen Einschallbedingungen erhält man für einen möglicherweise guten Schweißpunkt eine auf eine unzureichende Verschweißung hinweisende Anzeige, oder auch bei nicht korrekter Ausrichtung des Prüfkopfes infolge starker Dämpfung durch Ausbleiben der Fehlerechos einen guten Schweißpunkt vorgetäuscht.

Die Bewertung der Echofolgen auf dem Bildschirm eines Ultraschallgerätes ist schwierig und setzt große Erfahrung beim Prüfer voraus. Dies bedeutet aber, daß objektive Ergebnisse nicht immer zu erreichen sind.

Hier setzt nun die Erfindung ein. Sie hat es sich zur Aufgabe gemacht, das Ultraschallprüfungsverfahren der eingangs genannten Art dahingehend weiter zu entwickeln, daß es für eine automatische Erfassung der Qualität von Punktschweißverbindungen von Blechen geeignet ist.

Ausgehend von dem Verfahren der eingangs genannten Art schlägt die Erfindung als Lösung vor, daß die Frequenzspektren der Echofolgen berechnet und daß jeweils die der Gesamtdickenlaufzeit entsprechende Spektrallinie einerseits auf ausreichende Mindestamplitude und andererseits auf ausreichende Mindestbreite untersucht wird.

Die der Gesamtdickenlaufzeit entsprechende Spektrallinie ist im Frequenzspektrum die Spektrallinie mit der tiefsten Frequenz. Bei gleichdicken verschweißten Blechen fällt ihre erste Harmonische zusammen mit der Spektrallinie nullter Ordnung aus den Einzelblechdicken. Je schmaler die Spektrallinie aus der Gesamtdicke ist, umso geringer ist die Dämpfung der Echofolge aus der Gesamtdicke, umso länger ist also diese Echofolge in der zeitlichen Darstellung. Wird die gewisse Mindestbreite erreicht, so bedeutet dies eine Echofolge, die eine gewisse Länge (Abklingzeit) nicht überschreitet.

Aus der Existenz der Spektrallinie für die Gesamtdickenlaufzeit ergibt sich, daß eine Verbindung zwischen den beiden Blechen überhaupt vorliegt. Überschreitet diese Spektrallinie auch die Mindestamplitude, so liegt eine ausreichend großflächige Verbindung zwischen den beiden Einzelblechen vor.

Die Mindestamplitude und die Mindestbreite der Spektrallinie aus der Echofolge der Gesamtdickenlaufzeit ermöglichen somit eine verläßliche Bewertung der Qualität einer Punktschweißverbindung. Durch Setzen zweier Schwellenwerte in der genannten Spektrallinie ist eine automatische Erfassung der Qualität einer Punktschweißverbindung möglich, dabei wird eine grundsätzlich zutreffende, durch weitere, jedoch nicht notwendige Maßnahmen aber noch zu verbessernde Aussage erhalten.

Zusammenfassend hat die Erfindung also erkannt, daß durch Analyse einer Spektrallinie aus dem Frequenzspektrum der Gesamtechofolge eine Aussage über die Qualität einer Punktschweißverbindung möglich ist. In der einen Spektrallinie aus der Gesamtdickenlaufzeit (bzw. in ihren Harmonischen) stecken die Aussagen über den Abfall der Echofolge aus der Gesamtdicke in der zeitlichen Darstellung (A-Bild), und die relative Größe dieser Echos in Bezug auf andere Echos, beispielsweise ein Rückwandecho. Der Vorteil der Darstellung im Frequenzspektrum liegt nun darin, daß diese Informationen klar getrennt sind von den Informationen über die einzelnen Dikkenlaufzeiten. Dies ermöglicht eine Auswertung ohne Zuhilfenahme eines Menschen.

Bei Punktschweißverbindungen treten drei wesentliche Fehler auf, die über das erfindungsgemäße Verfahren sicher erfaßt werden: Sind die beiden Bleche nicht miteinander verschweißt, so fehlt die Spektrallinie der Gesamtdickenlaufzeit, die geforderte Mindestamplitude wird also nicht erreicht. Sind die beiden Bleche nur geklebt, so tritt zwar die Spektrallinie aus der Gesamtdickenlaufzeit auf, hat aber eine zu geringe Breite (entsprechend der geringen Dämpfung der Echofolge in der Zeitdarstellung). Ist schließlich die Linse zu klein oder hat die ansich ausreichend große Schweißlinse eine innere Fehlstelle, so ist ebenfalls die Breite der Spektrallinie zu gering, zudem tritt hier eine Verschiebung der Trägerfrequenz auf.

Bei der praktischen Durchführung des erfindungsgemäßen Verfahrens wird zunächst anhand von Probe-Punktschweißverbindungen, deren Qualität genau bekannt ist, der Schwellenwert für die Amplitude der Spektrallinie aus der Gesamtdickenlaufzeit und der Schwellenwert für deren Breite sowie die Bezugsfrequenz bei HF-Auswertung ermittelt. Auf diese Weise ist eine genaue Zuordnung zu konkreten geometrischen Verhältnissen in der Schweißlinse möglich. Danach wird mit der so justierten Prüfvorrichtung die eigentliche Prüfung unbekannter Schweißverbindungen durchgeführt. Die Bewertung der Amplitude erfolgt in Bezug auf das erste Rückwandecho.

In einer bevorzugten Weiterbildung wird vorgeschlagen, das Verhältnis der Amplitude der Spektrallinie aus der Gesamtdickenlaufzeit und mindestens einer gleichrangigen Spektrallinie aus einer Einzelblechdickenlaufzeit zu erfassen. Aus diesem Verhältnis wird eine Aussage über die Gesamtfläche der Schweißlinse erhalten. Je größer das Verhältnis ist, umso größer ist die Fläche der Schweißlinse.

Weiterhin wird vorgeschlagen, nicht nur einen Schwellenwert für die Mindestbreite, sondern auch einen Schwellenwert für die Maximalbreite der Spektrallinie aus der Gesamtdickenlaufzeit vorzusehen. Überschreitet die Spektrallinie aus der Gesamtdickenlaufzeit eine gewisse Breite, liegt keine ordentliche Echofolge für die Echos aus der Gesamtdicke vor und/oder sind die Einschallbedingungen nicht optimal. Durch Verschieben des Prüfkopfes kann herausgefunden werden, welcher Effekt vorliegt.

Die Breite einer Spektrallinie wird dabei in bekannter Weise in einer gewissen, relativen Höhe erfaßt, also beispielsweise 50 %, 63 % oder dergleichen der Maximalamplitude.

Weiterhin hat es sich als vorteilhaft herausgestellt, vor der Berechnung des Frequenzspektrums zunächst die Gesamtechofolge in der zeitlichen Darstellung (A-Bild) darzustellen. Dies hat den Vorteil, daß der mit den derzeitigen Mitteln noch aufwendige Rechenvorgang einer Fouriertransformation erst dann gestartet wird, wenn aus dem A-Bild bereits ersichtlich ist, daß eine Echofolge aus der Gesamtlaufdicke vorliegt.

Weiterhin wird vorgeschlagen, daß für optimale Frequenzauflösung die Fouriertransformation nur für einen Frequenzbereich ausgewertet wird, der mindestens die zweite Harmonische der Spektrallinie aus der Gesamtdickenlaufzeit entfällt.

Weitere Vorteile und Merkmale der Erfindung ergeben sich aus den übrigen Ansprüchen sowie der nun folgenden Beschreibung von nicht einschränkend zu verstehenden Ausführungsbeispielen für das erfindungsgemäße Verfahren. Diese werden unter Bezugnahme auf die Zeichnung im folgenden näher erläutert. In der Zeichnung zeigen:
- Fig. 1: ein Diagramm des zeitlichen Ablaufs des Gesamtechos (A-Bild) aufgetragen ist die elektrische Spannung U (in Volt) über der Zeit t,
- Fig. 2: die zugehörige Fouriertransformierte, also Darstellung im Frequenzspektrum, beides für einen guten Schweißpunkt, aufgetragen ist die Energiedichte E über der Frequenz f
- Fig. 3: ein Diagramm entsprechend Fig. 1 für einen zu kleinen Schweißpunkt, und
- Fig. 4: ein Diagramm entsprechend Fig. 2 für diesen Schweißpunkt.

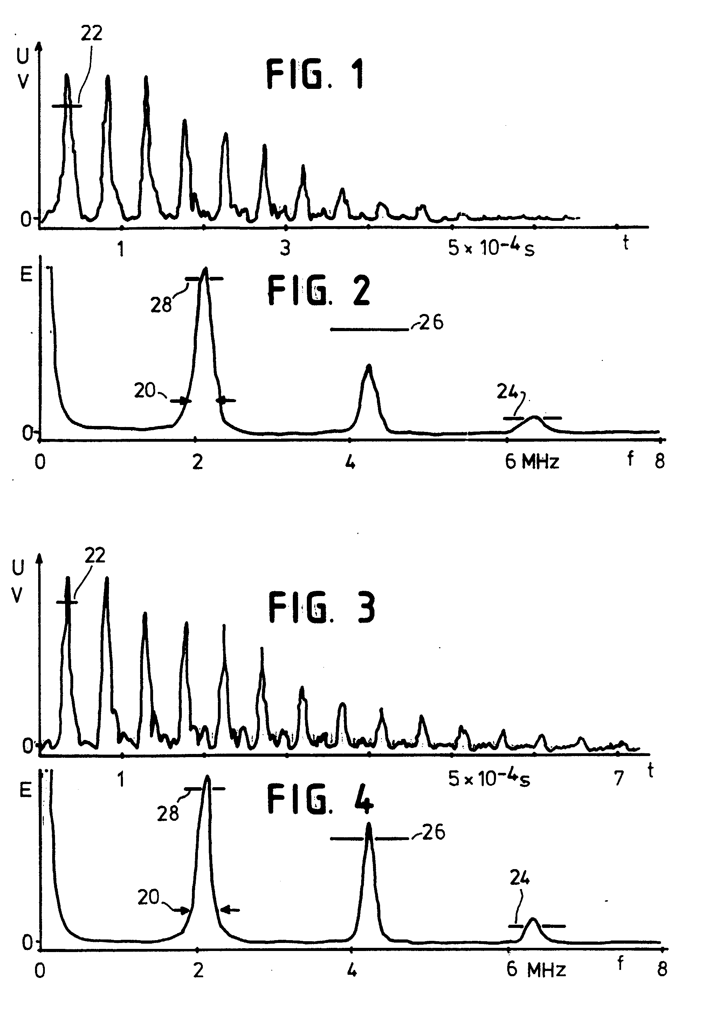

Die Figuren betreffen Frequenzverläufe bzw. Spektren des gleichgerichteten Ultraschallsignals. In der Praxis hat sich die Anwendung des Hochfrequenz-Spektrums, also des Spektrums des nicht gleichgerichteten Signals, und damit des HF-Signals, als vorteilhaft erwiesen. Die Ausführungen zu den Figuren 1 bis 4 können auf den Fall eines HF-Signals übertragen werden, da die Spektrallinien spiegelsymmetrisch zur Trägerfrequenz auftreten. Bei gleichgerichteten Ultraschallsignalen ist als Trägerfrequenz der Wert Null anzusetzen. Aus einer Bewertung der Störung der Symmetrie können weitere Informationen erhalten werden.

Aus einem 15 MHz-Prüfkopf mit festem Vorlauf und einem Wandlerdurchmesser von ca. 3 mm wird ein Ultraschallimpuls in den Bereich einer Punktschweißnaht zwischen zwei gleich dicken, aus dem gleichen Material hergestellten Blechen eingeschallt. Die erhaltenen Echos werden mit demselben Prüfkopf wieder aufgenommen, in einem Ultraschallgerät verstärkt, gleichgerichtet und digitalisiert, sodann in einem Rechner ausgewertet. Mittels dessen Programm werden wahlweise Spektren und/oder A-Bilder dargestellt. Im Auswerteprogramm sind Auswertekriterien enthalten, auf die später noch eingegangen wird. Sind sie insgesamt erfüllt, so wird durch ein Signal, beispielsweise einen Summton, die geprüfte Schweißnaht als gut klassifiziert.

Mittels des Auswerteprogramms wird zunächst das A-Bild (Fig. 1 oder 3) daraufhin untersucht, ob das erste Echo nach dem Eintrittsecho ein Rückwandecho ist, also laufzeitmäßig der Gesamtdicke beider durch die Punktschweißung zu verbindenden Bleche entspricht. Liegt ein derartiges Rückwandecho nicht vor, sind die beiden Bleche nicht miteinander verbunden bzw. befindet sich der Prüfkopf vollständig außerhalb des zu prüfenden Schweißpunktes. Weiterhin werden die ersten drei bis vier Echos aus der Gesamtdicke daraufhin analysiert, ob ein monotoner Abfall vorliegt. Liegt kein monotoner Abfall vor, so deutet dies auf eine falsche Positionierung des Prüfkopfes. In beiden Fällen (kein Rückwandecho bzw. kein monotoner Abfall der ersten drei bis vier Echos aus der Gesamtdicke) wird vom Auswerteprogramm ein Signal ausgegeben, das zu einer besseren Positionierung des Prüfkopfes auffordert. Eine Fouriertransformation zur Erstellung der Spektren gemäß den Figuren 2 und 4 findet erst statt, wenn erstens Rückwandechos aus der Gesamtdicke vorliegen und zweitens die ersten drei bis vier Echos aus der Gesamtdicke monoton abfallen.

Für die Fouriertransformation erfolgt eine Datenreduktion der digital vorliegenden zeitlichen Daten (entsprechend A-Bild), um den Rechenaufwand zu reduzieren. Zudem erfolgt eine Filterung am Anfang und am Ende des für die Bewertung genutzten Zeitbereichs. Im besprochenen Ausführungsbeispiel wird jeweils ein cosinus-roll-off Filter eingesetzt. Dadurch werden Stufen am Anfang und am Ende des Zeitbereichs, die Artefakte im Frequenzbereich liefern würden, vermieden. Der Frequenzbereich wird auf 0 MHz bis 8 MHz bei den in Figur 1 bzw. 3 dargestellten, gleichgerichteten zeitlichen Signalen eingeschränkt.

In den zeitlichen Darstellungen (Fig. 1 und 3) ist das Eintrittsecho jeweils unterdrückt. Es wird dadurch bei der Fouriertransformation nicht berücksichtigt.

Die Spektraldarstellungen gemäß Fig. 2 und 4 zeigen Energiedichten E als Funktion der Frequenz f. Bei der Auswertung im Rechner werden sowohl die Breiten der einzelnen Spektrallinien als auch ihre relativen Maxima für die Bewertung herangezogen.

Zur Erzielung einer möglichst feinen Auflösung im Frequenzbereich ist bei vorgegebener Anzahl der zu verarbeitenden Daten eine Reduzierung der Anzahl aufgenommener Daten erwünscht. Um eine Verfälschung der Spektralverteilung durch höherfrequente Signalanteile aufgrund der Datenreduzierung zu vermeiden sowie zur Unterdrückung von Rauschanteilen, werden die Daten im Zeitbereich gemittelt. Für die genaue Berechnung der Amplitudenverhältnisse und Linienbreiten werden die Spektraldaten interpoliert.

Die erste Spektrallinie, die die Rückwandechos bei verbundenen Blechen aus der Gesamtblechdicke charakterisiert, liegt bei z. B. einer Gesamtblechdicke von 1,4 mm bei etwa 2 MHz. Bei zwei Blechen, die nicht miteinander verbunden sind, tritt diese Spektrallinie nicht auf, vielmehr tritt dann nur die Spektrallinie aus dem angekoppelten Einzelblech auf, die bei circa 4 MHz liegt. Zu diesen Spektrallinien gesellen sich noch die Harmonischen.

Die Breite einer Spektrallinie aus der Gesamtlaufzeit also z. B. ca. 2 MHz ist charakteristisch für die Dämpfung und ermöglicht eine Unterscheidung zwischen einer ordnungsgemäßen Schweißlinse mit ausreichender Dämpfung und einer zu kleinen Schweißlinse bzw. einer Klebung der beiden Bleche. Im Ausführungsbeispiel nach den Figuren 1 und 2 ist eine gute Schweißverbindung gezeigt. Die Breite der Spektrallinie wird über eine Schwelle, darstellt durch Pfeile 20, erfaßt. Aus Fig. 2 ist ersichtlich, daß die Spektrallinie in der gewählten Höhe breiter ist als die durch die Pfeile 20 markierte Schwelle. Anders ist dies im Falle von Fig. 4, hier ist die Spektrallinie schmaler als die gesetzte Schwelle. Das Ausführungsbeispiel nach den Figuren 3 und 4 bezieht sich auf eine geklebte Verbindung. Ein ähnliches Bild wie die Figuren 3 und 4 gibt auch eine zu kleine Schweißlinse. Bei zu kleinen Schweißlinsen tritt häufig auch ein Anwachsen der Zwischenechos mit wachsender Zeit auf.

Die Parameter der Schwelle 20 werden aus experimentellen Vorversuchen ermittelt. Hierzu werden zunächst einige Punktschweißverbindungen einerseits ultraschallmäßig und andererseits durch ein anderes Meßverfahren, beispielsweise durch Aufmeißeln, Anschneiden usw. untersucht. Dabei werden Bleche und sonstige Schweißparameter verwendet, wie sie auch bei den später zu prüfenden Punktschweißverbindungen vorliegen. Aus diesen Vorversuchen kann eine Mindestbreite der Schwelle 20 sowie ihre Höhe auf der Skala der Energiedichte festgelegt werden.

Die optimale Prüfkopfposition für eine Schweißverbindung, also die optimalen Einschallbedingungen können aus der Zeit- und/oder der Spektraldarstellung überprüft werden: Im Zeitbereich wird ein möglichst monotoner Abfall der Rückwandechos gesucht, um sicher zu sein, daß der größtmöglichste Bereich der Schweißlinse durchstrahlt wird. Liegt zudem das erste Rückwandecho über einem Minimum (Schwelle 22) bei vorgegebener Gesamtverstärkung des Ultraschallgerätes, sind die Einschallbedingungen zumindest gut (können aber noch verbessert werden). Schlechte Einschallbedingungen führen zu einer steil abfallenden Echofolge und in der Frequenzdarstellung zu einer Verbreiterung der Spektrallinien. Die Einschallbedingungen kann man im Frequenzbild durch Überwachen der Breiten der ersten und der zweiten Spektrallinie (Fig. 2 und 4) sowie durch Setzen einer Schwelle für die Energiedichte der ersten Harmonischen der Gesamtdicke (dritte Spektrallinie etwas oberhalb 6 MHz) erfaßen. Diese Schwelle ist in Fig. 2 und 4 mit dem Bezugszeichen 24 versehen. Liegt die dritte Spektrallinie oberhalb der Schwelle 24, sind die Einschallbedingungen ausreichend.

Als besonders günstig hat sich in der Frequenzdarstellung auch folgendes Verfahren zur Ermittlung optimaler Einschallbedingungen, also der optimalen Positionierung, erwiesen: Betrachtet wird einerseits die erste Spektrallinie aus der Gesamtblechdicke (Gesamtblechdickenlaufzeit) und andererseits eine höherranginge Spektrallinie, die nicht durch die Einzelblechdicke gestört ist, also eine ungeradzahlige Spektrallinie, beispielsweise die dritte Spektrallinie. Das Verhältnis dieser höherrangingen Spektrallinie zur ersten Spektrallinie soll so groß wie möglich sein. Optimale Einschallbedingungen und damit eine optimale Positionierung liegt dann vor, wenn das Optimum dieses Verhältnisses aufgefunden ist. Dieses Verfahren läßt sich auch auf das Verhältnis höherrangiger Spektrallinien, beispielsweise der fünften zur dritten, anwenden.

In den Figuren 2 und 4 ist noch eine weitere Schwelle 26 gezeigt, sie ist der zweiten Spektrallinie zugeordnet. Bleibt die zweite Spektrallinie unterhalb dieser Schwelle 26, wie dies für Fig. 2, allerdings nicht für Fig. 4 der Fall ist, so bedeutet dies, daß das Signal aus den Einzelblechlaufzeiten ausreichend gering ist, also einerseits die Einschallbedingungen in Ordnung sind und andererseits auch der Schweißpunkt vermutlich in Ordnung ist. Durch seitliches Verschieben des Prüfkopfes kann man feststellen, ob bei den sich dann ändernden Einschallbedingungen die Energiedichte der zweiten Spektrallinie anwächst. Die optimalen Einschallbedingungen bei einer guten Schweißnaht liegen auch vor bei in einem Minimum der zweiten Spektrallinie und gleichzeitigem Maximum der dritten Spektrallinie.

Bei der praktischen Durchführung wird die erste Spektrallinie (ca. 2 MHz) auf 1 gesetzt und die Höhe der zweiten Spektrallinie beobachtet. Bleibt diese unterhalb der Schwelle 26, so ist - wie oben ausgeführt - der Schweißpunkt in Ordnung. In der Praxis wird also die Mindestamplitude (Energiedichte) der ersten Spektrallinie nicht absolut, sondern relativ erfaßt. Wenn die erste Spektrallinie eine ausreichende, empirisch bestimmte Größe im Vergleich zur zweiten Spektrallinie hat, ist der Schweißpunkt in Ordnung. Wie bei der Schwelle 20 wird auch die Schwelle 22 durch Vergleich mit Probeschweißpunkten erfaßt und festgelegt.

Ein Vergleich der A-Bilder (Fig. 1 und 3) mit den Frequenzdarstellungen (Fig. 2 und 4) zeigt, daß die Frequenzdarstellungen einfacher erfaßbar und daher auch einfacher für einen Rechner auswertbar sind. Das erfindungsgemäße Verfahren ermöglicht eine weitgehend automatisierte Prüfung von Punktschweißverbindungen.

Das erfindungsgemäße Verfahren eignet sich auch zur Prüfung von Schweißnähten mit mehr als zwei Blechen, beispielsweise drei Blechen. Hier macht sich positiv bemerkbar, daß die Frequenzdarstellung deutlich einfacher ist und weniger Details aufweist als die bei mehr als zwei Blechen eine Vielzahl von Einzelsignalen aufweisenden A-Bilder.

## Patentansprüche

1. Verfahren zur Ultraschallprüfung von Punktschweißverbindungen von Blechen, bei dem ein hochfrequenter Prüfkopf mit einem dem Solldurchmesser der zu prüfenden Punktschweißverbindung entsprechenden Wandlerdurchmesser an die Bleche im Bereich einer Punktschweißverbindung über eine Vorlaufstrecke angekoppelt wird und nach dem Impuls-Echo-Verfahren Ultraschallsignale eingeschallt und die erhaltenen Echofolgen ausgewertet werden, dadurch gekennzeichnet, daß das Frequenzspektrum der Echofolgen berechnet und daß jeweils eine der Gesamtdickenlaufzeit entsprechende Spektrallinie einerseits auf ausreichende Mindestamplitude, bzw. Energiedichte, und andererseits auf ausreichende Mindestbreite, bzw. Dämpfung, untersucht wird.

2. Verfahren nach Anspruch 1, dadurch gekennzeichnet, daß die Echofolgen vor der Berechnung der Frequenzspektren gleichgerichtet werden oder vorzugsweise nicht gleichgerichtet werden.

3. Verfahren nach Anspruch 1 oder 2, dadurch gekennzeichnet, daß zur Optimierung der Einschallbedingungen des Prüfkopfes in der Zeitdarstellung, entspricht dem A-Bild, ein Schwellenwert (22) für das erste, der Gesamtlaufzeit entsprechende Echo vorgesehen wird, welcher überschritten werden muß.

4. Verfahren nach Anspruch 1 bis 3, dadurch gekennzeichnet, daß zur Optimierung der Einschallbedingungen des Prüfkopfes in der Frequenzdarstellung Spektrallinien betrachtet werden, die nur durch die Gesamtblechdicke bestimmt sind und wobei darauf geachtet wird, daß das Verhältnis einer höherrangigen Spektrallinie zu einer niederrangigeren möglichst hoch ist, insbesondere bei zwei gleich dicken Blechen das Verhältnis der dritten Spektrallinie zur ersten Spektrallinie möglichst groß ist.

5. Verfahren nach einem der Anspruch 1 bis 4, dadurch gekennzeichnet, daß das Frequenzspektrum durch eine Fouriertransformation bei vorgegebenen Einschallbedingungen erst dann errechnet wird, wenn die Amplitude des ersten Rückwandechos in der zeitlichen Darstellung oberhalb eines Schwellenwertes (22) liegt und/oder die Echosignale aus der Gesamtdicke monoton abfallen, also das n+1-te Echo amplitudenmäßig im Zeitbild kleiner ist als das n-te Echo.

6. Verfahren nach einem der Ansprüche 1 bis 5, dadurch gekennzeichnet, daß in der Frequenzdarstellung eine Schwelle (26) für eine Spektrallinie aus einer Einzelblechlaufzeit vorgesehen ist, die bei einem guten Schweißpunkt nicht überschritten werden darf.

7. Verfahren nach einem der Ansprüche 1 bis 6, dadurch gekennzeichnet, daß das Verhältnis der Amplitude der Spektrallinie aus der Gesamtdikkenlaufzeit und mindestens einer Spektrallinie aus einer Einzelblechdickenlaufzeit erfaßt wird, insbesondere daß das Verhältnis der Amplitude der Spektrallinie aus der Einzelblechlaufzeit, der die Schwelle (26) zugeordnet ist und der ersten Spektrallinie der Gesamtdickenlaufzeit erfaßt wird.

8. Verfahren nach einem der Ansprüche 1 bis 7, dadurch gekennzeichnet, daß für eine Spektrallinie aus der Gesamtblechdickenlaufzeit im Frequenzbereich eine Schwelle (24) gesetzt wird, die Vorliegen ausreichender Einschallbedingungen signalisiert.

9. Verfahren nach einem der Ansprüche 1 bis 8, dadurch gekennzeichnet, daß die Spektrallinie aus der Gesamtdickenlaufzeit auf eine gewisse Maximalbreite überwacht wird.

10. Verfahren nach einem der Ansprüche 1 bis 9, dadurch gekennzeichnet, daß zur Vereinfachung der Fouriertransformation eine Datenreduktion erfolgt.

11. Verfahren nach einem der Ansprüche 1 bis 10, dadurch gekennzeichnet, daß am Anfang und am Ende des gewählten Zeitbereichs eine Filterung erfolgt um artefizielle Frequenzlinien zu vermeiden.

12. Verfahren nach Anspruch 1, dadurch gekennzeichnet, daß die erste Spektrallinie untersucht wird.

## Claims

1. An ultrasonic method for the inspection of point welds between metal sheets, in which a high frequency test probe with a transducer diameter equal to the nominal diameter of the point weld to be inspected is coupled, with a lead section, to the sheets in the vicinity of the point weld and, using the pulse/echo method, the sheets are irradiated with ultrasonic signals and the echo pulse trains received are evaluated, characterized in that the frequency spectrum of the echo pulse trains is calculated and that for each measurement the spectral line corresponding to the overall-thickness travel time is examined on the one hand for sufficient minimum amplitude respectively energy density and on the other hand for sufficient minimum width respectively attenuation.

2. A method according to Claim 1, further characterized in that before the calculation of the frequency spectra the echo pulse trains are rectified or preferably not rectified.

3. A method according to Claim 1 or 2, further characterized in that for the optimization of the irradiation conditions of the test probe a threshold value (22) is established in the time-domain representation, corresponding to the A-image, for the first echo pulse corresponding to the total travel time, which must be surpassed.

4. A method according to Claims 1 through 3, further characterized in that for the optimization of the irradiation conditions of the test probe spectral lines are observed in the frequency-domain representation, which are exclusively determined by the overall sheet thickness, making sure that the amplitude ratio of a higher order spectral line to a lower order spectral line is as high as possible; specifically in the case of two equally thick sheets, that the amplitude ratio of the third spectral line to the first spectral line is as high as possible.

5. A method according to any of the Claims 1 through 4, further characterized in that under predetermined irradiation conditions the frequency spectrum is only then calculated by a Fourier transform, when the amplitude of the first back-wall echo in the time-domain representation lies above a threshold value (22) and/or the echo pulse signals from the overall thickness show a monotonous decay, i.e. the amplitude of the n+1-th echo pulse is smaller than the n-th echo pulse in the time image.

6. A method according to any of the Claims 1 through 5, further characterized in that in the frequency-domain representation a threshold (26) is provided for a spectral line from a single-sheet travel time, which must not be surpassed for a good weld point.

7. A method according to any of the Claims 1 through 6, further characterized in that the amplitude ratio between the spectral line from the overall-thickness travel time and at least one spectral line from a single-sheet travel time is measured; specifically that the amplitude ratio of the spectral line from the single-sheet travel time, with which the threshold (26) is associated, and the first spectral line of the overall-thickness travel time is measured.

8. A method according to any of the Claims 1 through 7, further characterized in that a threshold (24) is established for a spectral line from the overall-sheet-thickness travel time in the frequency domain, which indicates the existence of adequate irradiation conditions.

9. A method according to any of the Claims 1 through 8, further characterized in that the spectral line from the overall-thickness travel time is monitored for a certain maximal width.

10. A method according to any of the Claims 1 through 9, further characterized in that a data reduction is performed to facilitate the computation of the Fourier transform.

11. A method according to any of the Claims 1 through 10, further characterized in that tapering is performed at the beginning and at the end of the selected time interval to avoid artificial frequency lines.

12. A method according to Claim 1, further characterized in that the first spectral line is examined.

## Revendications

1. Procédé de contrôle ultrasonore de joints soudés par points de tôles, dans le cas duquel un palpeur à haute fréquence présentant un diamètre de transducteur correspondant au diamètre nominal du joint soudé par points à contrôler est couplé, par une pré-course, aux tôles dans la zone d'un joint soudé par points, et, selon la méthode par échos d'impulsions, des signaux ultrasonores sont emis dans les tôles et les suites d'échos obtenues sont évaluées, caractérisé par le fait que le spectre de fréquences des suites d'échos est calculé et que respectivement une raie spectrale correspondant à la durée de parcours de l'épaisseur totale est examinée d'un côté à l'égard d'une amplitude minimale suffisante ou bien de la densité de flux d'énergie et, de l'autre côté, à l'égard d'une largeur minimale suffisante ou bien de l'amortissement.

2. Procédé selon la revendication 1, caractérisé par le fait que les suites d'échos sont redressées ou, de préférence, ne sont pas redressées avant la calculation des spectres de fréquences.

3. Procédé selon la revendication 1 ou 2, caractérisé par le fait que, pour l'optimisation des conditions d'irradiation acoustique du palpeur, on prévoit - sur la représentation du temps, correspond à l'image A - une valeur seuil (22) pour le premier écho correspondant à la durée totale de parcours, qui doit être dépassée.

4. Procédé selon la revendication 1 à 3, caractérisé par le fait que, pour l'optimisation des conditions d'irradiation acoustique du palpeur, on observe - sur la représentation de la fréquence - des raies spectrales qui ne sont déterminées que par l'épaisseur totale de la tôle, tout en veillant à ce que le rapport d'une raie spectrale de rang plus élevé à une raie spectrale de rang plus bas soit aussi grand que possible, et que, en particulier dans le cas de deux tôles présentant la même épaisseur, le rapport de la troisième raie spectrale à la première raie spectrale soit aussi grand que possible.

5. Procédé selon l'une des revendications 1 à 4, caractérisé par le fait que, dans des conditions d'irradiation acoustique prédéterminées, le spectre de fréquences n'est calculé par une transformation de Fourier que lorsque l'amplitude du premier écho de fond se trouve - sur la représentation du temps - au-dessus d'une valeur seuil (22) et/ou que les signaux des échos, correspondant à l'épaisseur totale descendent de manière monotone, c'est-à-dire que le n+1^{ième} écho est quant à l'amplitude - sur la représentation de temps - plus petit que le n^{ième} écho.

6. Procédé selon l'une des revendications 1 à 5, caractérisé par le fait que, sur la représentation de fréquences, on prévoit un seuil (26) pour une raie spectrale correspondant à une durée de parcours d'une tôle individuelle, qui ne doit pas être dépassé dans le cas d'un bon point de soudage.

7. Procédé selon l'une des revendications 1 à 6, caractérisé par le fait que l'on mesure le rapport de l'amplitude de la raie spectrale correspondant à la durée de parcours de l'épaisseur totale et d'au moins une raie spectrale correspondant à une durée de parcours de l'épaisseur totale d'une tôle individuelle, et, en particulier, que l'on mesure le rapport de l'amplitude de la raie spectrale correspondant à la durée de parcours d'une tôle individuelle, à laquelle est associé le seuil (26), et de la première raie spectrale de la durée de parcours de l'épaisseur totale.

8. Procédé selon l'une des revendications 1 à 7, caractérisé par le fait que l'on établit, dans la gamme de fréquences, un seuil (24) pour une raie spectrale correspondant à la durée de parcours de l'épaisseur totale de tôle, et ledit seuil signale la présence de conditions d'irradiation acoustique suffisantes.

9. Procédé selon l'une des revendications 1 à 8, caractérisé par le fait que la raie spectrale correspondant la durée de parcours de l'épaisseur totale est surveillée à l'égard d'une certaine largeur maximale.

10. Procédé selon l'une des revendications 1 à 9, caractérisé par le fait que l'on effectue une réduction de données pour simplifier la transformation de Fourier.

11. Procédé selon l'une des revendications 1 à 10, caractérisé par le fait qu'un filtrage est effectué au début et à la fin de l'intervalle de temps choisi afin d'éviter des lignes artificielles de fréquence.

12. Procédé selon la revendication 1, caractérisé par le fait que la première raie spectrale est examinée.
